# EUROPEAN PATENT APPLICATION

(11) **EP 4 831 607 A1**
(43) Date of publication of application: **28.10.2026**
(21) Application number: 25870953.4
(22) Date of filing: 11.09.2025
(51) Int. Cl.: G01N 3/18, G01N 3/04, G01N 3/02

(54) **MULTI-FUNCTIONAL SMALL PUNCH TEST DEVICE AND METHOD**

(30) Priority: 27.09.2024 CN 202411365408
(71) Applicant: Suzhou Nuclear Power Research Institute Co., Ltd., Suzhou, Jiangsu 215004 (CN)
(72) Inventor: LIU, Xiangbing, Suzhou, Jiangsu 215004 (CN); LI, Yuanfei, Suzhou, Jiangsu 215004 (CN); XU, Chaoliang, Suzhou, Jiangsu 215004 (CN); JIN, Xiao, Suzhou, Jiangsu 215004 (CN); JIA, Wenqing, Suzhou, Jiangsu 215004 (CN); QUAN, Qiwei, Suzhou, Jiangsu 215004 (CN); WU, Huanchun, Suzhou, Jiangsu 215004 (CN); YIN, Jian, Suzhou, Jiangsu 215004 (CN); QIAN, Wangjie, Suzhou, Jiangsu 215004 (CN)
(74) Representative: Westphal, Mussgnug & Partner, Patentanwälte mbB
(86) International application number: PCT/CN2025/120690
(87) International publication number: WO 2026/067054

(57) **Abstract**

The present invention relates to a multifunctional small punch test device and method, the device comprising: a driving unit, a loading unit, a first fixing unit, a second fixing unit, a third fixing unit, a detection unit, a temperature control unit, and a control unit; the driving unit drives the loading unit to move according to a driving signal; the first fixing unit fixes the loading unit, the second fixing unit and the third fixing unit cooperate to fix a circular specimen; the detection unit performs force-displacement detection on the specimen to be pressed; the specimen to be pressed comprises: a plurality of punch balls; the temperature control unit executes temperature regulation and control according to a control signal output by the control unit. The present invention can determine material mechanical property parameters based on multiple sets of data in a single test, with high reliability; it can also solve the problem of a single test temperature in existing fixtures, and simultaneously enables the acquisition of mechanical property parameters for multiple materials at specific temperatures in a single experiment, avoiding repetitive tests and significantly improving experimental efficiency.

## Description

### TECHNICAL FIELD

The present invention relates to the technical field of mechanical property testing of metallic materials, and more specifically, to a multifunctional small punch test device and method.

### DESCRIPTION OF RELATED ART

With the continuous increase in energy demand, the integrity and safety of equipment such as oil and gas pipelines and pressure vessels, which serve as critical energy mechanical structures during service, are receiving growing attention. These devices operate for extended periods under high pressure, high temperature, deep-sea low temperature, and corrosive environments, inevitably leading to the degradation of their mechanical performance parameters. Therefore, the mechanical performance parameters under high or low temperature environments constitute a crucial indicator for evaluating the structural safety performance of important equipment, necessitating accurate testing and assessment of the degradation of material mechanical performance parameters under different temperature conditions.

The current small punch test device has the following technical issues:
1. Existing small punch test devices, after obtaining the load-displacement curve of a material through a single experiment, typically determine the material's mechanical property parameters by extracting values at specific points on the curve and applying empirical formulas. Their reliability is relatively low, and the applicability of these empirical formulas is also relatively limited, which restricts the application scope of small punch test device;
2. When testing the mechanical properties of a specific material under different temperature conditions, existing small punch test devices require repeated experiments, resulting in relatively low efficiency;
3. When testing the mechanical properties of different materials under the same temperature conditions, existing small punch test devices also necessitate multiple repeated experiments, which affects experimental efficiency.

### BRIEF SUMMARY OF THE INVENTION

The technical problem to be solved by the present invention is to provide a multifunctional small punch test device and method.

The technical solution adopted by the present invention to solve its technical problem is to construct a multifunctional small punch test device, comprising: a driving unit, a loading unit, a first fixing unit, a second fixing unit, a third fixing unit, a detection unit, a temperature control unit, and a control unit;
The driving unit is connected to the loading unit and is configured to drive the loading unit to move according to a driving signal;
The first fixing unit, the second fixing unit, and the third fixing unit are arranged along the axial direction from top to bottom; the first fixing unit is used to fix the loading unit; the second fixing unit and the third fixing unit cooperate to fix a circular specimen; the detection unit is installed on the loading unit and is located between the first fixing unit and the second fixing unit; the detection unit is configured to perform force-displacement detection on a specimen to be pressed and output a detection signal to the control unit when the loading unit applies pressure to the specimen to be pressed; the specimen to be pressed comprises: a plurality of punch balls;
The temperature control unit is connected to the control unit and is configured to perform temperature regulation control according to a control signal output by the control unit.

In the multifunctional small punch test device described in the present invention, the loading unit comprises: a main loading rod and a plurality of punch ball loading rods;
The main loading rod and the plurality of punch ball loading rods are arranged on the first fixing unit, and the main loading rod is connected to the driving unit;
The main loading rod moves according to the drive of the driving unit and drives the plurality of punch ball loading rods and the detection unit to move, so as to apply pressure to a plurality of punch balls placed below the detection unit.

In the multifunctional small punch test device according to the present invention, the first fixing unit comprises: a plurality of first threaded holes arranged corresponding to the plurality of punch ball loading rods; the detection unit comprises: a plurality of force-displacement sensors arranged corresponding to the plurality of punch ball loading rods;
The plurality of first threaded holes are uniformly spaced along the circumferential direction, and the first threaded holes are engaged with threads on the cylindrical surfaces of the punch ball loading rods;
Each of the force-displacement sensors is arranged below the corresponding punch ball loading rod.

In the multifunctional small punch test device according to the present invention, the second fixing unit comprises: a plurality of through holes arranged correspondingly to the plurality of punch ball loading rods;
The plurality of through holes are uniformly spaced along the circumferential direction, and each of the through holes allows the corresponding punch ball loading rod and punch ball to pass through.

In the multifunctional small punch test device according to the present invention, a plurality of first positioning holes and a plurality of second threaded holes are arranged around each of the through holes;
The third fixing unit comprises: a plurality of fixing devices; the plurality of fixing devices are arranged corresponding to the plurality of through holes;
Each of the fixing devices is of a barrel-shaped structure, a central hole is provided at the cylindrical center of the barrel-shaped structure, and a plurality of second positioning holes and a plurality of third threaded holes are provided on the upper surface of the barrel-shaped structure;
The plurality of second positioning holes are arranged corresponding to the plurality of first positioning holes, and the plurality of third threaded holes are arranged corresponding to the plurality of second threaded holes;
The plurality of second positioning holes and the plurality of first positioning holes cooperate to allow positioning pins to pass through and fix the positioning pins;
The plurality of second threaded holes and the plurality of third threaded holes cooperate to allow connecting screws to pass through and connect the second fixing unit and the third fixing unit, so as to clamp the circular specimen located between the second fixing unit and the third fixing unit.

In the multifunctional small punch test device described in the present invention, the temperature control unit comprises: a plurality of temperature control modules;
The plurality of temperature control modules are arranged correspondingly to the plurality of punch ball loading rods, and are respectively used for temperature regulation.

In the multifunctional small punch test device described in the present invention, each of the temperature control modules comprises: a temperature control box, an electric heating wire, and a temperature sensor;
The temperature control box is disposed below the fixing device corresponding to it, and the electric heating wire and the temperature sensor are disposed inside the temperature control box;
The electric heating wire is connected to the control unit and is configured to be turned on/off according to the control of the control unit;
The temperature sensor is configured to detect the temperature inside the temperature control box and output a temperature detection signal to the control unit.

In the multifunctional small punch test device according to the present invention, each of the temperature control modules further comprises: a coolant delivery port;
The coolant delivery port is arranged on the temperature control box for delivering coolant into the interior of the temperature control box.

In the multifunctional small punch test device according to the present invention, the center of the first threaded hole on the first fixing unit, the through hole on the second fixing unit, and the center hole on the third fixing unit are located on the same axis.

The present invention further provides a multifunctional small punch test method, applied to the multifunctional small punch test device described above, comprising the following steps:
Constructing a small punch test model;
Acquiring input parameters and test load;
Performing simulation calculations based on the input parameters and the test load to obtain a plurality of sets of simulated force-displacement curves;
Executing a small punch test;
Recording test data during the test process;
Analyzing according to the test data to obtain a plurality of sets of experimental force-displacement curves;
Determining whether the simulated force-displacement curves match the plurality of sets of experimental force-displacement curves;
If they match, determining material mechanical property parameters;
If they do not match, adjusting the input parameters and continuing the simulation calculations until the simulated force-displacement curves match the plurality of sets of experimental force-displacement curves.

The multifunctional small punch test device and method of the present invention provide the following beneficial effects: the device comprising: a drive unit, a loading unit, a first fixing unit, a second fixing unit, a third fixing unit, a detection unit, a temperature control unit, and a control unit; the drive unit drives the loading unit to move according to a drive signal; the first fixing unit secures the loading unit, the second fixing unit cooperates with the third fixing unit to secure a circular specimen; the detection unit performs force-displacement detection on the specimen to be pressed; the specimen to be pressed comprises: a plurality of punch balls; the temperature control unit executes temperature regulation and control according to a control signal output by the control unit. The present invention can determine material mechanical property parameters based on multiple sets of data in a single test, with high reliability; it can also solve the problem of a single test temperature in existing fixtures, and simultaneously enables the acquisition of mechanical property parameters for multiple materials at specific temperatures in a single experiment, avoiding repetitive tests and significantly improving experimental efficiency.

### BRIEF DESCRIPTION OF THE SEVERAL VIEWS OF THE DRAWINGS

The present invention will be further described below with reference to the accompanying drawings and embodiments, in which:
FIG. 1 is a structural schematic diagram of a multifunctional small punch test device provided by the present invention;
FIG. 2 is a top view of the multifunctional small punch test device provided by the present invention;
FIG. 3 is an exploded view of the multifunctional small punch test device provided by the present invention;
FIG. 4 is a flowchart schematic diagram of a multifunctional small punch test method provided by the present invention.

### DETAILED DESCRIPTION OF THE INVENTION

The following will clearly and completely describe the technical solutions in the embodiments of the present invention with reference to the accompanying drawings in the embodiments of the present invention. It is evident that the described embodiments are only a part of the embodiments of the present invention, rather than all of them. Based on the embodiments of the present invention, all other embodiments obtained by those of ordinary skill in the art without making creative efforts shall fall within the protection scope of the present invention.

The present invention provides a multifunctional small punch test device and method, which can achieve: accurate measurement of the mechanical properties of materials via small punch tests under ambient temperature; simultaneous testing of small punch experiments on the same material at different temperatures; and simultaneous testing of small punch experiments on different materials at the same temperature. Furthermore, the multifunctional small punch test device and method provided by the present invention feature simple experimental procedures and a reasonable design. Utilizing this multifunctional small punch test device enables the simultaneous execution of small punch tests on circular specimens of different sizes (diameters) within a certain range using punch balls of various diameters under multiple temperature environments. By combining multiple single small punch fixtures, corresponding force-displacement curves are obtained from each force-displacement sensor, and mechanical property parameters are then acquired through finite element inverse analysis. The implementation process is straightforward, and it offers high precision, providing a reference basis for the evaluation of mechanical properties of materials under test.

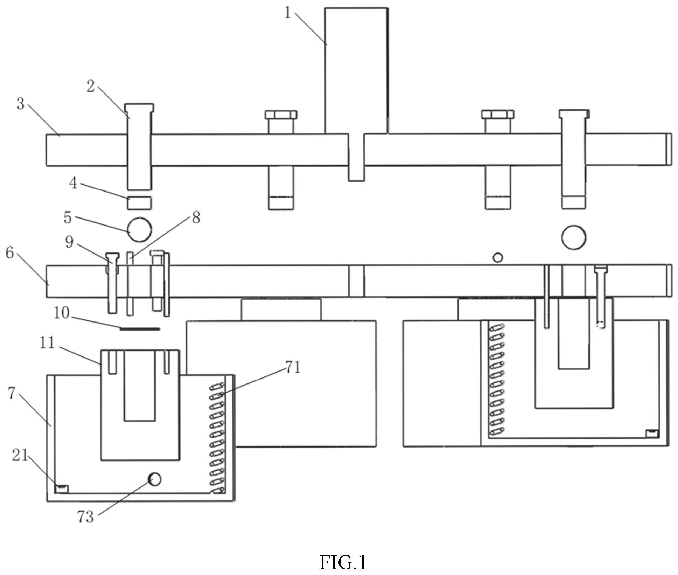

Referring to FIG. 1 to 3, the structural diagrams of the multifunctional small punch test device are provided by the present invention.

Specifically, as shown in FIG. 1, the multifunctional small punch test device comprises: a driving unit, a loading unit, a first fixing unit 3, a second fixing unit 6, a third fixing unit, a detection unit, a temperature control unit, and a control unit. Among these, the driving unit and the control unit are not illustrated in FIG. 1.

In the embodiment of the present invention, the driving unit is connected to the loading unit and is configured to drive the loading unit to move according to a driving signal.

Optionally, in the embodiment of the present invention, the control unit is a computer terminal.

In the embodiment of the present invention, the first fixing unit 3, the second fixing unit 6, and the third fixing unit are arranged axially from top to bottom. The first fixing unit 3 is used to fix the loading unit, while the second fixing unit 6 and the third fixing unit cooperate to fix the circular specimen 10. The detection unit is installed on the loading unit and located between the first fixing unit 3 and the second fixing unit 6. The detection unit is configured to perform force-displacement detection on the circular specimen to be pressed and output detection signals to the control unit when the loading unit applies pressure to the specimen to be pressed. The specimen to be pressed includes a plurality of punch balls. The temperature control unit is connected to the control unit and is configured to execute temperature regulation control according to the control signals output by the control unit.

Specifically, as shown in FIG. 1, the loading unit comprises: a main loading rod 1 and a plurality of punch ball loading rods 2. The main loading rod 1 and the plurality of punch ball loading rods 2 are disposed on a first fixing unit 3, and the main loading rod 1 is connected to a driving unit; the main loading rod 1 moves according to the drive from the driving unit and drives the plurality of punch ball loading rods 2 to move with a detection unit, so as to apply pressure to a plurality of punch balls placed below the detection unit.

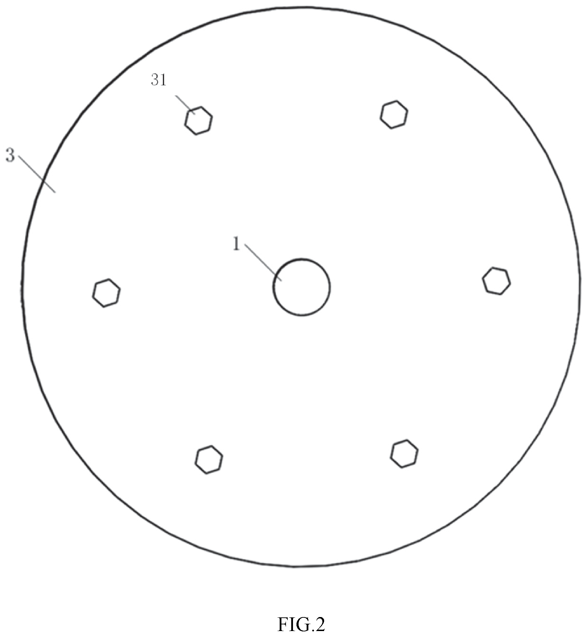

As shown in FIG. 2, the first fixing unit 3 comprises: a plurality of first threaded holes 31 arranged correspondingly to respect to the plurality of punch ball loading rods 2; the detection unit comprises: a plurality of force-displacement sensors 4 arranged correspondingly to respect to the plurality of punch ball loading rods 2; the plurality of first threaded holes 31 are evenly spaced along the circumferential direction, and the first threaded holes 31 engage with threads on the cylindrical surfaces of the punch ball loading rods 2; each force-displacement sensor 4 is disposed below a corresponding punch ball loading rod 2.

Optionally, in the embodiment of the present invention, the driving unit is a motor, specifically the motor of an electronic universal testing machine. The connection method between the main loading rod 1 and the motor can refer to that of the electronic universal testing machine. In a preferred embodiment, the plurality of punch ball loading rods 2 can be set to six. Correspondingly, the detection unit can include six force-displacement sensors 4, with each force-displacement sensor 4 arranged below its corresponding punch ball loading rod 2.

In a preferred embodiment, as shown in FIG. 2, the first fixing unit 3 can be provided with six first threaded holes 31, which are uniformly arranged every 60° around a circle. The cylindrical surface of each punch ball loading rod 2 is threaded. The thread on the cylindrical surface of the punch ball loading rod 2 engages with the corresponding first threaded hole 31. Each punch ball loading rod 2 is connected below (typically via a threaded connection) to a force-displacement sensor 4, responsible for detecting and collecting the force-displacement curve of the punch ball in each set of small punch tests. The main loading rod 1 moves driven by the motor, and drives the six punch ball loading rods 2 and the force-displacement sensors 4 to move, thereby applying pressure to the punch balls.

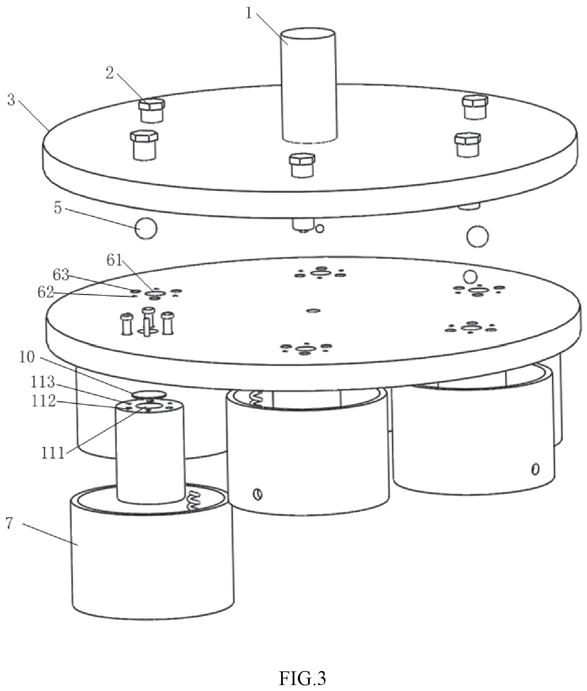

As shown in FIG. 3, in this embodiment, the second fixing unit 6 comprises: a plurality of through holes 61 arranged correspondingly to the plurality of punch ball loading rods 2. The plurality of through holes 61 are evenly spaced apart circumferentially, each through hole 61 allowing its corresponding punch ball loading rod 2 and punch ball to pass through. A plurality of first positioning holes 62 and a plurality of second threaded holes 63 are arranged around each through hole 61. The third fixing unit comprises: a plurality of fixing devices. The plurality of fixing devices are arranged correspondingly to the plurality of through holes 61. Each fixing device is a barrel-shaped structure 11, and a central hole 111 is provided in the cylindrical center of the barrel-shaped structure 11. A plurality of second positioning holes 112 and a plurality of third threaded holes 113 are provided on the upper surface of the barrel-shaped structure 11. The plurality of second positioning holes 112 are arranged correspondingly to the plurality of first positioning holes 62, and the plurality of third threaded holes 113 are arranged correspondingly to the plurality of second threaded holes 63. The plurality of second positioning holes 112 and the plurality of first positioning holes 62 cooperate to allow a positioning pin 8 to pass through and be fixed. The plurality of second threaded holes 63 and the plurality of third threaded holes 113 cooperate to allow a connecting screw 9 to pass through and connect the second fixing unit 6 and the third fixing unit, so as to clamp a circular specimen 10 located between the second fixing unit 6 and the third fixing unit.

Among them, the center of the first threaded hole 31 on the first fixing unit 3, the through hole 61 on the second fixing unit 6, and the center hole 111 on the third fixing unit are located on the same axis.

In a preferred embodiment, the second fixing unit 6 can be provided with six through holes 61. These six through holes 61 are uniformly arranged at 60° intervals around the circumference. The punch ball loading rod 2 and the punch ball can pass through the through holes 61. Around each through hole 61, three first positioning holes 62 and three second threaded holes 63 are additionally arranged.

In this embodiment, the third fixing unit is configured as a barrel-shaped structure 11. Correspondingly, the third fixing unit is provided with six barrel-shaped structures 11. A central hole 111 is arranged at the cylindrical center of each barrel-shaped structure 11. The upper surface of each barrel-shaped structure 11 is provided with a third threaded hole 113 and a second positioning hole 112. A positioning pin 8 passes through the first positioning hole 62 on the second fixing unit 6 and the second positioning hole 112 on the third fixing unit to achieve the positioning fit between the second fixing unit 6 and the third fixing unit. A connecting screw 9 passes through the second threaded hole 63 on the second fixing unit 6 and the third threaded hole 113 on the third fixing unit to achieve the overall connection between the second fixing unit 6 and the third fixing unit, thereby realizing the clamping of the circular specimen 10. Herein, the upper surface of the circular specimen 10 fits against the bottom surface of the second fixing unit 6, and the lower surface of the circular specimen 10 fits against the upper surface of the third fixing unit.

Optionally, in the embodiments of the present invention, the diameter range of the punch ball is 0-20 mm, and the diameter range of the circular specimen 10 is 0-40 mm. The ball center of the punch ball and the center of the circular specimen 10 are located on the same vertical axis. The centers of the six first threaded holes 31 on the first fixing unit 3, the six through holes 61 on the second fixing unit 6, and the central holes 111 on the third fixing unit are located on the same vertical axis.

Optionally, in the embodiments of the present invention, the temperature control unit comprises: a plurality of temperature control modules; the plurality of temperature control modules are arranged corresponding to the plurality of punch ball loading rods 2, and are respectively used for temperature adjustment. In a preferred embodiment, the temperature control unit may be provided with six temperature control modules.

Optionally, in the embodiments of the present invention, each temperature control module comprises: a temperature control box 7, an electric heating wire 71, and a temperature sensor 72.

The temperature control box 7 is arranged below the fixing device corresponding to it; the electric heating wire 71 and the temperature sensor 72 are arranged inside the temperature control box 7; the electric heating wire 71 is connected to the control unit and is configured to be turned on/off according to the control of the control unit; the temperature sensor 72 is configured to detect the temperature inside the temperature control box 7 and output a temperature detection signal to the control unit.

Furthermore, each temperature control module also includes: a coolant delivery port 73; the coolant delivery port 73 is arranged on the temperature control box for delivering coolant into the interior of the temperature control box 7.

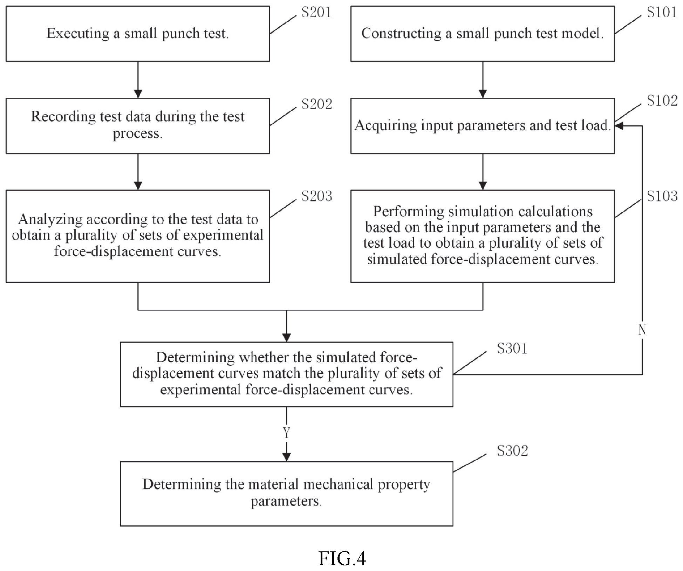

Referring to FIG. 4, which is a schematic flowchart illustrating the multifunctional small punch test method provided by the present invention.

The multifunctional small punch test method is applied to the multifunctional small punch test device disclosed in the embodiments of the present invention.

Specifically, as shown in FIG. 4, the multifunctional small punch test method comprises the following steps:
Step S101: Constructing a small punch test model.
   Optionally, in the embodiments of the present invention, the small punch test model can be a Hollomon model. For metallic materials, the yield stress ranges from 200 to 800 MPa, and the hardening exponent ranges from 0.1 to 0.5.
Step S102: Acquiring input parameters and test load.
   Herein, the input parameters are the input material mechanical property parameters. The test load can be determined based on actual simulations.
Step S103: Performing simulation calculations based on the input parameters and the test load to obtain a plurality of sets of simulated force-displacement curves.

Step S201: Executing the small punch test.

Step S202: Recording test data during the test process.

Step S203: Analyzing according to the test data to obtain a plurality of sets of experimental force-displacement curves.

Step S301: Determining whether the simulated force-displacement curves match the plurality of sets of experimental force-displacement curves. If they do not match, adjusting the input parameters and continuing the simulation calculations until the simulated force-displacement curves match the plurality of sets of experimental force-displacement curves.

Step S302: If they match, determining material mechanical property parameters.

In the embodiments of the present invention, by inputting any combination of mechanical property parameters into finite element software, when the simulated load-displacement curve (i.e., the simulated force-displacement curve) matches the experimental load-displacement curve (i.e., the experimental force-displacement curve), the input combination is considered to be the mechanical property parameters of the test material. Specifically, 20 points are uniformly selected on both the experimental force-displacement curve and the simulated force-displacement curve. A match, i.e., agreement, is determined if the error for these 20 points does not exceed ±5%.

Regarding the existing technical issue 1, the multifunctional small punch test device and method provided by the present invention utilize six sets of indenters of different sizes (with diameters of 1mm, 2mm, 3mm, 4mm, 5mm, and 6mm, respectively), loading rods, and matching load sensors,i.e., force-displacement sensors, enabling the simultaneous acquisition of six sets of different small punch test curves. Subsequently, by comparing these with the six sets of small punch test curves calculated from the mechanical property parameters input into the finite element model, and through repeated iterations, when the six sets of load-displacement curves calculated from the mechanical property parameters input into the finite element model match the six load-displacement curves obtained from the experiment, the mechanical property parameters input into the finite element model can be considered as the mechanical property parameters of the material under test.

Regarding the existing technical issue 2, the present invention solves the problem of existing fixtures having a single testing temperature and being limited to testing only one temperature condition per experiment by arranging six sets of environmental boxes (i.e., temperature control boxes 7) at the testing positions of the rotating small punch specimens. Within these environmental boxes, electric heating wires 71 (to raise the ambient temperature to 400°C), a liquid nitrogen port (i.e., coolant delivery port 73, to lower the temperature to -196°C), and temperature sensors 72 (for ambient temperature feedback) are installed.

Regarding the existing technical issue 3, when it is necessary to simultaneously test the mechanical property parameters of 2 to 6 materials at a specific temperature (-196°C to 400°C), the present invention only requires setting the temperatures of the six environmental boxes uniformly. Then, by selecting punch balls of six different materials to perform small punch tests for these six different materials and conducting finite element inversion separately with reference to the aforementioned method, the mechanical property parameters of the six materials at the specific temperature can be obtained in a single experiment.

The steps of the present invention are simple and the design is reasonable. Utilizing this invention enables simultaneous small punch experiments on the same or different materials within a certain range under a specific temperature environment (-196°C to 400°C). The use of environmental boxes allows for small punch experiments under various temperature conditions simultaneously. By combining multiple single small punch fixtures, the corresponding load curves are acquired from each force-displacement sensor 4. Combined with the displacement curve of the fixture in the present invention, the mechanical property parameters are then obtained through the finite element inversion method. The implementation process is relatively easy and offers high accuracy, further improving experimental efficiency and providing a foundation for the realization of small punch experiments in variable temperature environments and the precise testing of material mechanical properties.

The embodiments in this specification are described in a progressive manner, with each embodiment focusing on the differences from other embodiments. The identical or similar parts between the various embodiments can be understood by cross-referencing. For the device disclosed in the embodiments, as it corresponds to the method disclosed in the embodiments, the description is relatively brief, and relevant parts can be understood by referring to the description in the method section.

Professionals may further realize that the units and algorithm steps of each example described in conjunction with the embodiments disclosed herein can be implemented by electronic hardware, computer software, or a combination of both. To clearly illustrate the interchangeability of hardware and software, the composition and steps of each example have been generally described according to function in the foregoing description. Whether these functions are performed by hardware or software depends on the specific application and design constraints of the technical solution. Professionals can use different methods for each specific application to implement the described functions, but such implementation should not be considered beyond the scope of the present invention.

The steps of the methods or algorithms described in conjunction with the embodiments disclosed herein can be implemented directly in hardware, in a software module executed by a processor, or in a combination of both. The software module may reside in random access memory (RAM), internal memory, read-only memory (ROM), electrically programmable ROM, electrically erasable programmable ROM, registers, hard disk, removable disk, CD-ROM, or any other form of storage medium known in the technical field.

The above embodiments are provided only to illustrate the technical concept and features of the present invention, with the aim of enabling those skilled in the art to understand the content of the present invention and implement it accordingly, and are not intended to limit the scope of protection of the present invention. All equivalent changes and modifications made within the scope of the claims of the present invention shall fall within the coverage of the claims of the present invention.

## Claims

1. A multifunctional small punch test device, wherein, the device comprising: a driving unit, a loading unit, a first fixing unit, a second fixing unit, a third fixing unit, a detection unit, a temperature control unit, and a control unit;
the driving unit is connected to the loading unit and is configured to drive the loading unit to move according to a driving signal;
the first fixing unit, the second fixing unit, and the third fixing unit are arranged axially from top to bottom; the first fixing unit is used to fix the loading unit; the second fixing unit and the third fixing unit cooperate to fix a circular specimen; the detection unit is installed on the loading unit and located between the first fixing unit and the second fixing unit; the detection unit is configured to perform force-displacement detection on a specimen to be pressed and outputting a detection signal to the control unit when the loading unit applies pressure to the specimen to be pressed; the specimen to be pressed comprises: a plurality of punch balls;
the temperature control unit is connected to the control unit and is configured to perform temperature regulation control according to a control signal output by the control unit.

2. The multifunctional small punch test device according to claim 1, wherein, the loading unit comprises: a main loading rod and a plurality of punch ball loading rods;
the main loading rod and the plurality of punch ball loading rods are arranged on the first fixing unit, and the main loading rod is connected to the driving unit;
the main loading rod moves according to the drive of the driving unit and drives the plurality of punch ball loading rods and the detection unit to move, so as to apply pressure to a plurality of punch balls placed below the detection unit.

3. The multifunctional small punch test device according to claim 2, wherein, the first fixing unit comprises: a plurality of first threaded holes arranged corresponding to the plurality of punch ball loading rods; the detection unit comprises: a plurality of force-displacement sensors arranged corresponding to the plurality of punch ball loading rods;
the plurality of first threaded holes are uniformly spaced along the circumferential direction, and the first threaded holes are matched with threads on the cylindrical surfaces of the punch ball loading rods;
each of the force-displacement sensors is arranged below the corresponding punch ball loading rod.

4. The multifunctional small punch test device according to claim 2, wherein, the second fixing unit comprises: a plurality of through holes arranged correspondingly to the plurality of punch ball loading rods;
the plurality of through holes are uniformly spaced along the circumferential direction, each of the through holes allowing the corresponding punch ball loading rod and punch ball to pass through.

5. The multifunctional small punch test device according to claim 4, wherein, a plurality of first positioning holes and a plurality of second threaded holes are arranged around each of the through holes;
the third fixing unit comprises: a plurality of fixing devices; the plurality of fixing devices are arranged correspondingly to the plurality of through holes;
each of the fixing devices is of a barrel-shaped structure, and a central hole is provided at the cylindrical center of the barrel-shaped structure, a plurality of second positioning holes and a plurality of third threaded holes are provided on the upper surface of the barrel-shaped structure;
the plurality of second positioning holes are arranged correspondingly to the plurality of first positioning holes, and the plurality of third threaded holes are arranged correspondingly to the plurality of second threaded holes;
the plurality of second positioning holes and the plurality of first positioning holes cooperate to allow positioning pins to pass through and fix the positioning pins;
the plurality of second threaded holes and the plurality of third threaded holes cooperate to allow connecting screws to pass through and connect the second fixing unit and the third fixing unit, so as to clamp the circular specimen located between the second fixing unit and the third fixing unit.

6. The multifunctional small punch test device according to claim 5, wherein, the temperature control unit comprises: a plurality of temperature control modules;
the plurality of temperature control modules are arranged corresponding to the plurality of punch ball loading rods, and are respectively used for temperature regulation.

7. The multifunctional small punch test device according to claim 6, wherein, each of the temperature control modules comprises: a temperature control box, an electric heating wire, and a temperature sensor;
the temperature control box is arranged below the fixing device corresponding to it, and the electric heating wire and the temperature sensor are arranged inside the temperature control box;
the electric heating wire is connected to the control unit and is configured to be turned on/off according to the control of the control unit;
the temperature sensor is configured to detect the temperature inside the temperature control box and output a temperature detection signal to the control unit.

8. The multifunctional small punch test device according to claim 7, wherein, each of the temperature control modules further comprises: a coolant delivery port;
the coolant delivery port is arranged on the temperature control box for delivering coolant into the temperature control box.

9. The multifunctional small punch test device according to claim 5, wherein, the center of the first threaded hole on the first fixing unit, the through hole on the second fixing unit, and the center hole on the third fixing unit are located on the same axis.

10. A multifunctional small punch test method, applied to the multifunctional small punch test device according to any one of claims 1-9, wherein, the method comprises the following steps:
constructing a small punch test model;
acquiring input parameters and test load;
performing simulation calculations based on the input parameters and the test load to obtain a plurality of sets of simulated force-displacement curves;
executing a small punch test;
recording test data during the test process;
analyzing according to the test data to obtain a plurality of sets of experimental force-displacement curves;
determining whether the simulated force-displacement curves match the plurality of sets of experimental force-displacement curves;
if they match, determining the material mechanical property parameters;
if they do not match, adjusting the input parameters and continuing the simulation calculations until the simulated force-displacement curves match the plurality of sets of experimental force-displacement curves.
